**Europäisches Patentamt**

**European Patent Office**

**Office européen des brevets**

(19)

(11) Veröffentlichungsnummer: **0 161 412**
**B1**

(12) **EUROPÄISCHE PATENTSCHRIFT**

(45) Veröffentlichungstag der Patentschrift:
**10.06.87**

(51) Int. Cl.⁴: **B 65 G 37/02,** B 65 G 47/29

(21) Anmeldenummer: **85102821.7**

(22) Anmeldetag: **12.03.85**

(54) Transportvorrichtung zum Fördern von Werkstückträgern.

(30) Priorität: **12.03.84 DE 3408963**

(43) Veröffentlichungstag der Anmeldung:
**21.11.85 Patentblatt 85/47**

(45) Bekanntmachung des Hinweises auf die Patenterteilung:
**10.06.87 Patentblatt 87/24**

(84) Benannte Vertragsstaaten:
**DE FR GB IT SE**

(56) Entgegenhaltungen:
**DE-A-1 756 438**
**DE-A-3 229 191**
**DE-A-3 243 906**

(73) Patentinhaber: **Liebherr- Verzahntechnik GmbH,**
**Kaufbeurer Strasse 141, D-8960 Kempten (DE)**

(72) Erfinder: **Weiss, Rafael, Parkstrasse 55, D-8960**
**Kempten (DE)**

(74) Vertreter: **Klunker, Hans- Friedrich, Dr.,**
**Patentanwälte Klunker . Schmitt- Nilson .**
**Hirsch Winzererstrasse 106, D-8000 München 40**
**(DE)**

LIBER, STOCKHOLM 1987

EP 0 161 412 B1

## Beschreibung

Die Erfindung betrifft eine Transportvorrichtung zum Fördern von Werkstückträgern, gemäß dem Oberbegriff des Anspruchs 1.

Eine solche Transportvorrichtung ist aus der DE-OS 17 56 438 bekannt.

Solche Transportvorrichtungen werden etwa zur Förderung von Werkstücken von einer Fertigungsstufe zu einer nächsten verwendet, wobei die Transportvorrichtung einen Stau von ankommenden vollen oder leeren Trägern ermöglichen muß, der durch die unterschiedliche Abnahme- bzw. Beladungsgeschwindigkeit der Werkstücke entstehen kann.

Die bekannte Transportvorrichtung weist ein Paar paralleler, mit Abstand voneinander angeordneter, über Umlenkräder laufender Endlos-Förderbänder auf. Mit diesen stehen die Träger jeweils so in Reibungseingriff, daß bei einem Stau das Förderband durchrutschen kann.

Bei Förderanlagen, die solche Transportvorrichtungen verwenden, sind unter anderem Hubvorrichtungen erforderlich; auch ist der Antrieb aufwendig. Ferner ist infolge des erforderlichen Reibungseingriffes die Anzahl und das jeweilige Gewicht der mit jeweils einer Transportvorrichtung beweglichen Träger begrenzt.

Diesen Nachteilen wird durch den Gegenstand der DE-PS 25 22 299 abgeholfen, indem die beiden Förderbänder durch zwei Endlosketten ersetzt werden. Diese Ketten laufen in zwei zueinander parallelen, jeweils in einer Vertikalebene angeordneten Umlaufbahnen in starren Führungsschienen, wobei die einander zugewandten Flanken der jeweiligen Ketten aus den Führungen herausragen. Die Träger sind mittels federnder Klemmbacken an den überstehenden Enden der Ketten befestigt.

Obwohl den eingangs genannten Nachteilen durch die letztgenannte Transportvorrichtung weitgehend abgeholfen wird, bringt diese verbesserte Vorrichtung doch ihrerseits wieder erhebliche Nachteile mit sich, und zwar hohen Verschleiß, hohe Lärmbelastung der Umgebung und insbesondere großen baulichen Aufwand, der bedingt ist durch die Ketten selbst, die hierfür erforderlichen Spannvorrichtungen und die aufwendigen Klemmeinrichtungen der Träger. Außerdem ist die Baulänge der bekannten Transportvorrichtung, sowie Anzahl und Tragfähigkeit der durch sie gleichzeitig bewegbaren Träger wiederum begrenzt, und zwar insbesondere deshalb, weil die nur mit den Flanken der Ketten in Eingriff stehenden Klemmbacken die Ketten in ihren Führungen verkanten.

Ausgehend von der oben umrissenen Problemlage liegt der Erfindung die Aufgabe zugrunde, die eingangs genannte Transportvorrichtung dahingehend zu verbessern, daß der betriebliche und bauliche Aufwand verringert wird, wobei insbesondere mehr und/oder schwerere Träger sowie die Überwindung von Höhenunterschieden ermöglicht sein sollen.

Diese Aufgabe wird erfindungsgemäß durch die Merkmale des Anspruchs 1 gelöst.

Hierbei besteht das Förderband (oder bei der Anordnung mehrerer, zueinander paralleler Förderbänder jedes dieser) aus zwei übereinanderliegenden Flachriemen, die über die Umlenkräder gespannt sind. Es hat somit das bzw. jedes Förderband ein doppeltes Ober- und Untertrum. An den Trägern sind Finger derart angeordnet, daß sie von der Seite her quer zu den beiden jeweils ein Förderband bildenden Flachriemen zwischen diese hineingreifen.

Durch den Eingriff zwischen den Förderbändern wird im Ober- und Untertrum jeweils der obere Flachriemen, der infolge seines Gewichtes nach unten sinkt, rund um jeden Finger ein wenig nach oben ausgelenkt, so daß der Reibungseingriff zwischen dem Finger und insbesondere dem oberen Riemen nicht nur infolge der Reibungspaarung und dem Eigengewicht des Riemens, sondern auch infolge des Umschlingungswinkels hergestellt wird, den der über den Finger gehängte Flachriemen an diesem bildet.

Wenn nun bei einem Stau mehrere Träger aufeinander auflaufen, dann befinden sich deren Finger in nur geringem gegenseitigem Abstand, so daß der auf der Oberseite dieser Finger aufliegende Riemen nicht mehr, wie vorher beschrieben, einen Umschlingungswinkel bildet. Es verringert sich somit an einem Stau die vom Riemen auf die Finger übertragene Reibung und somit auch der Bedarf an Antriebsleistung für die erfindungsgemäße Transportvorrichtung.

Die beiden Riemen liegen am Außenumfang der Umlenkscheiben, von welchen sie angetrieben werden, stramm aufeinander, so daß jeder Finger, der an die Umlenkscheibe heranläuft, zwischen den beiden Riemen gewissermaßen fest eingespannt wird und relativ zur Umlenkscheibe so lang fixiert bleibt, bis er deren Umfang passiert hat und von dieser wieder abläuft. Somit ist es möglich, auf beladene Träger vom Untertrum zum Obertrum und umgekehrt zu überführen, ohne daß die unter Umständen schwerbeladenen Träger zum Durchrutschen neigen.

Der bauliche Aufwand für die erfindungsgemäße Transportvorrichtung ist, obwohl sie alle Funktionen der eingangs beschriebenen, bekannten Vorrichtungen auszuführen imstande ist, außerordentlich gering; insbesondere gegenüber der mit Förderketten ausgestatteten Vorrichtung entfällt das Erfordernis einer Ketten-Spanneinrichtung, da es ausreicht, die jeweils ein Förderband bildenden Riemen so zu bemessen, daß sie beim Aufziehen auf ihre Umlenkrollen um etwa 1 bis 3 % gelängt werden müssen, um sicherzustellen, daß diese Riemen während ihrer gesamten Betriebslebensdauer hinlänglich stramm gespannt bleiben.

Der einzige, bei der Vorrichtung auftretende Verschleiß liegt in den Riemen, welche von Zeit zu Zeit ausgewechselt werden müssen. Die schwieriger herzustellenden und auszuwechselnden Metallteile insbesondere an den einzelnen Trägern, nämlich die Finger, unterliegen keinerlei Verschleiß.

Ferner ist der Bedarf an Antriebsenergie auch deshalb sehr gering, weil die Förderbänder im Gewicht verhältnismäßig leicht sind und die den Reibungseingriff herstellenden Einrichtungen lediglich von einfachen Fingern gebildet sind. Von dem für einen beladenen Träger zulässigen Gesamtgewicht entfällt somit ein höherer Anteil auf die Nutzlast, als dies bei den bekannten Trägern der Fall war.

Die erfindungsgemäße Vorrichtung ermöglicht auch das einfache Einsetzen und Entnehmen von Trägern, da der Eingriff zwischen Träger und Riemen einfach dadurch hergestellt und gelöst werden kann, daß man den Finger zwischen die Riemen einschiebt bzw. aus diesen wieder herauszieht.

Es ist auch möglich, durch Auseinanderspreizen der beiden Riemen antriebslose Zonen zu schaffen, falls dies erforderlich ist.

Es gelingt somit mit geringstem Steueraufwand, den Eingriff individueller Träger oder mehrerer Gruppen von Trägern mit den Riemen herzustellen bzw. zu lösen.

Um eine größere Beladung, also eine größere Anzahl an Trägern und/oder schwerere Träger zuzulassen, und um auch gegebenenfalls größere Entfernungen mittels der Vorrichtung zu überbrücken, wird gemäß einer weiteren Ausgestaltung der Erfindung vorgeschlagen, daß der untenliegende Riemen des Obertrums vorzugsweise auch des Untertrums, im wesentlichen über seine ganze Länge hinweg auf einer Stützfläche aufliegt. Die Stützfläche erhöht hierbei die Tragfähigkeit der Vorrichtung und stellt an jeder Stelle des Streckenverlaufes der Riemen sicher, daß der erforderliche Reibungseingriff zwischen dem jeweils obenliegenden Riemen und den Fingern hergestellt ist.

Diese Stützfläche ist bevorzugt mit einer reibungsmindernden Beschichtung versehen, wie etwa aus Polytetrafluorethylen, und ist bevorzugt aus einem dünnen Stahlband gebildet, das seinerseits mit geringstem baulichem Aufwand anbringbar ist und dessen natürlicher Durchhang bei Belastung jenem der Bänder entspricht und somit unschädlich ist.

In einer besonders einfachen Ausgestaltung der Erfindung tragen die Finger und somit auch die Bänder das Gewicht, das von den Trägern und der Nutzlast ausgeübt wird. Um aber eine höhere Beladung der Vorrichtung sicherzustellen, wird gemäß einer weiteren Ausgestaltung der Erfindung vorgeschlagen, daß mindestens eine sich entlang der Vorrichtung erstreckende Laufschiene vorgesehen sein soll; bevorzugt ist beiderseits der Vorrichtung jeweils unterhalb des Obertrums bzw. oberhalb des Untertrums der beiden aus jeweils zwei Riemen gebildeten Förderbänder eine Laufschiene angeordnet.

Die Träger sind mit jeweils mindestens einer Laufrolle, vorzugsweise mit insgesamt vier Laufrollen, versehen, welche leichtgängig gelagert sind und über welche sich die Träger auf den Laufschienen abstützen. Die Finger übernehmen somit nur noch den Antrieb der als Transportwagen ausgebildeten Träger.

Um die nötige Antriebskraft zu erhalten, ist es von Vorteil, mehrere, parallel zueinander angeordnete Finger an jeweils einem Träger vorzusehen, wobei jedoch diese Finger einen gewissen Mindestabstand zueinander aufweisen müssen, um die bereits oben beschriebene Wirkung des Umschlingungswinkels zumindest in begrenztem Umfang zur Geltung kommen zu lassen. Bevorzugt weist jeder Träger auf jeder Seite (bei der bevorzugten Anordnung mit zwei Förderbändern) jeweils zwei Finger auf, welche zwischen die Riemen eingreifen.

Um den Antriebseingriff zwischen Fingern und Flachriemen zu verändern, ist gemäß einer weiteren Ausgestaltung der Erfindung eine Einrichtung zum Verändern der Lage der Finger bezüglich dem Förderband vorgesehen.

Um den Reibungseingriff zu verbessern, ist gemäß einer weiteren Ausgestaltung der Erfindung mindestens ein zusätzlicher Spannfinger angeordnet, der nahe einem der oben genannten Finger und im wesentlichen parallel zu diesem angeordnet ist. Die Lage dieses Spannfingers ist bezüglich dem benachbarten Finger derart gewählt, daß der entsprechende Riemen, wenn er zwischen Finger und Spannfinger hindurchgeführt ist, aus seiner Verlaufrichtung ausgelenkt wird. Je mehr um den Riemen umgelenkt wird, desto größer ist auch der Umschlingungswinkel, der am Finger und am Spannfinger auftritt, und desto größer ist somit auch der Reibschluß mit diesen Elementen.

Deswegen ist es gemäß einer bevorzugten Ausgestaltung der Erfindung vorgesehen, die Spannfinger außerhalb des außenliegenden Riemens anzuordnen. Wenn der zugehörige Träger über eines der Umlenkräder läuft, dann ist der entsprechende Spannfinger wirkungslos, weil der um den Umfang des Umlenkrades herumlaufende Riemen vom Spannfinger weggekrümmt ist.

Bei der bevorzugten Ausführungsform mit zwei Förderbändern ist es dem Grunde nach möglich, nur an einem der Förderbänder einen Spannfinger anzuordnen. Diese Ausgestaltung erfordert allerdings eine weitere, bevorzugte Ausführungsform der Erfindung, gemäß welcher den Trägern mindestens eine sich längs der Fördereinrichtung erstreckende Laufschiene zugeordnet ist, die bevorzugt mit mindestens einer Führungsrolle mit vertikaler Achse zusammenwirkt. Hierbei ist es erforderlich, daß die Laufschiene zwei Eingriffsflächen aufweist, die entweder beiderseits eines Steges angeordnet sind; in diesem Falle besteht die Führungsrollenanordnung aus zwei Einzel-Führungsrollen; es ist aber auch möglich, zwei mit Abstand voneinander angeordnete, vertikale Wände zu verwenden, wobei eine einzige Führungsrolle in wechselseitigem Eingriff mit jeder der einander zugewandten Oberflächen der genannten Wände tritt. Die Funktion von Lauf- und Führungsrolle kann eine Rolle erbringen.

Der Spannfinger kann starr angeordnet oder auch einstellbar sein; in diesem Fall ist es möglich, durch Einstellung der Lage des Spannfingers die Reibungskraft zu wählen, mit welcher Spannfinger und zugeordneter Finger in den zugehörigen Riemen eingreifen.

Gemäß einer weiteren Ausgestaltung der Erfindung ist aber der Spannfinger quer zu seiner Längsachse bevorzugt bis außer Eingriff mit dem zugehörigen Riemen beweglich angeordnet, um die Wahl der Intensität des Reibungseingriffes von Null bis zum vollen Eingriff zu ermöglichen.

An der Vorderseite der Träger ist jeweils gemäß einer weiteren Ausgestaltung der Erfindung ein verschiebliches Auslöseglied angeordnet, welches mit dem Spannfinger derart verbunden ist, daß dann, wenn das Auslöseglied auf einen Widerstand aufläuft, etwa den letzten Träger an einer Staustelle, durch Eindrücken des Auslösegliedes der Spannfinger außer Eingriff mit dem Riemen gehoben wird, so daß nur noch verhältnismäßig geringe Reibungskräfte am eigentlichen Finger auftreten und dafür sorgen, daß der Stau stets dicht aufgeschlossen bleibt.

Es ist aber gemäß einer weiteren Ausgestaltung der Erfindung besonders von Vorteil, daß die den Spannfinger mit dem Auslöseglied verbindende Einrichtung eine Arretiereinrichtung ist, mittels welcher die beiden Endlagen des Spannfingers in und außer Eingriff mit dem Riemen feststellbar sind. Es ist somit durch eine verhältnismäßig einfache Arretiereinrichtung an jedem Träger sichergestellt, daß der Spannfinger nicht etwa eine Zwischenlage einnimmt, in welcher ein erhöhter Schlupf und somit ein erhöhter Abrieb am zugehörigen Riemen auftritt, sondern in Abhängigkeit von der Auslenkung des Auslösegliedes sind genau definiert ein eingekuppelter und ein ausgekuppelter Betriebszustand erreichbar. Wenn beispielsweise in einem Stau der vorderste Träger entfernt wird, dann schließen die nachfolgenden Träger aufeinanderfolgend und rasch auf; es ist somit möglich, einem vorhandenen Stau mit hoher Geschwindigkeit Träger zu entnehmen, da alle Träger im Stau dann, wenn ihr Auslöseglied freigekommen ist, voll einkuppeln und alsbald die volle Bewegungsgeschwindigkeit erreichen. Hierbei finden die einzelnen Einkupplungsvorgänge jedoch aufeinanderfolgend statt so daß Riemen und Antrieb niemals überlastet werden.

Als Riemen wird bevorzugt eine zweiseitig mit einer Reibschicht versehene Zugschicht verwendet, wobei die Zugschicht für die Dehnfestigkeit sorgt, während die Reibschicht für die Herstellung des nötigen Reibungseingriffes sorgt.

Zusätzlich ist es noch möglich, die Außenfläche des außenliegenden Riemens mit einer ortsfesten Abdeckung zu versehen, welche am besten aus einem dünnen Federstahlband gebildet ist und zur Absicherung der Oberfläche des Riemens dient.

Die Erfindung betrifft nicht nur eine Transportvorrichtung der oben genannten Art, sondern auch eine Förderanlage, bei welcher solche Transportvorrichtung Verwendung finden.

Da jede der Transportvorrichtungen nur eine begrenzte Länge aufweisen kann sind zum Überbrücken größerer Entfernungen mehrere solcher Transporteinrichtungen hintereinanderliegend angeordnet. Hierbei ermöglicht es die oben erwähnte, mit dem Außenglied verbundene Arretiereinrichtung, daß in Abhängigkeit von der Ankunft eines Trägers am Ende eines Bandes über einen einfachen Kipphebel der vorderste Träger eines Staus am anderen Band freigegeben wird, und zwar in einer solchen Zuordnung, daß dann, wenn sich der Träger der genannten, ersten Vorrichtung am Umlenkrad nach unten bewegt, diesem von unten her am Umlenkrad der anderen Vorrichtung gerade der dieser zugeordnete Träger entgegenkommt, so daß ohne besondere Umsetzeinrichtung ein zu transportierender Gegenstand, etwa ein Werkstück, ohne weiteres von einem Träger auf den anderen umgeworfen werden kann.

Ein besonderer Vorteil der Erfindung liegt auch darin, daß man innerhalb einer Anlage, die erfindungsgemäße Vorrichtungen verwendet, diese Vorrichtungen auch geneigt und sogar vertikal ausgerichtet anordnen kann, da die erfindungsgemäß mit einfachen Mitteln herstellbaren Reibungseingriffe zwischen Fingern und Riemen voll ausreichen, damit man beladene Träger auch nach oben fördern kann.

Es ist somit möglich, alle innerhalb einer Förderanlage anfallenden Transportaufgaben mittels der erfindungsgemäßen Vorrichtung zu erledigen.

Der Gegenstand der Erfindung wird anhand der beigefügten, schematischen Zeichnungen beispielsweise noch näher erläutert. Es zeigen:

Fig. 1 einen Querschnitt durch eine erste Ausführungsform einer erfindungsgemäßen Vorrichtung,

Fig. 2 den Schnitt durch eine zweite Ausführungsform der erfindungsgemäßen Einrichtung,

Fig. 3 einen detaillierten Ausschnitt aus der Darstellung der Fig. 2,

Fig. 4 eine Seitenansicht eines Teils eines erfindungsgemäßen Trägers,

Fig. 5 einen Horizontalschnitt durch das in Fig. 4 gezeigte Teil,

Fig. 6 die Ansicht des Endes einer Vorrichtung, mit einem Umlenkrad, und

Fig. 7 die schematische Ansicht einer erfindungsgemäßen Förderanlage mit mehreren erfindungsgemäßen Transportvorrichtungen.

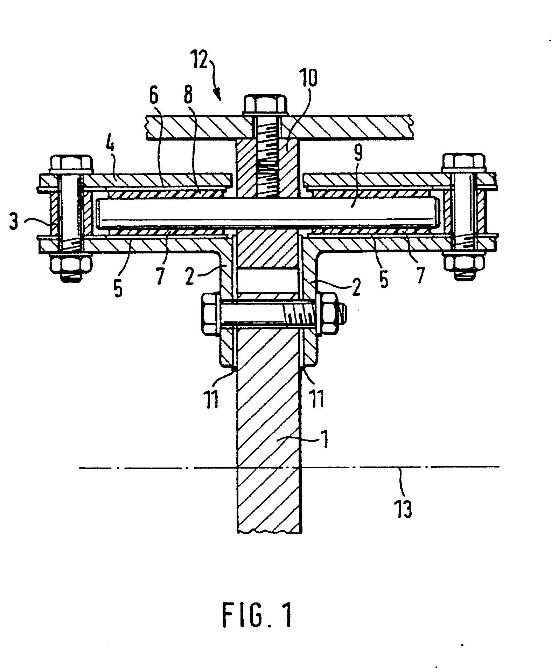

In Fig. 1 ist eine erste, einfache Ausführungsform der erfindungsgemäßen Transporteinrichtung im vertikalen Querschnitt gezeigt, wobei nur der obere Teil der Vorrichtung dargestellt ist.

Die Vorrichtung weist einen tragenden Mittelsteg 1 auf, an welchen in Längsabständen aufeinanderfolgend und jeweils einander gegenüberliegend beiderseits Winkel 2 in Formen von Winkeleisen angeordnet sind, welche miteinander verschraubt sind und zwischeneinander den Mittelsteg 1 einklemmen.

Auf die Oberseite eines jeden Winkels 2 ist an dessen äußerem Ende jeweils eine Distanzbüchse 3 aufgesetzt, auf deren oberem Ende jeweils ein sich parallel zum Winkel und einwärts erstreckender Halter 4 aus einem geraden Stück Bandeisen angesetzt ist. Winkel 2, Distanzbüchse 3 und Halter 4 sind jeweils durch eine Schraube miteinander zusammengespannt, welche durch das Innere der Distanzbüchse 3 verläuft.

Auf der Oberseite der Winkel liegt jeweils eine sich parallel zum Mittelsteg 1 erstreckende Unterlage 5 auf, die sich auf den Winkel 2 abstützt und aus Federbandstahl besteht.

Dieser Unterlage 5 zugewandt ist an der Unterseite der Halter 4 eine Abdeckung 6 angebracht, die sich ebenfalls parallel zum Mittelsteg 1 erstreckt und aus Federbandstahl gebildet ist.

Auf dem unteren Federstahlband 5 liegt das obere Trum eines Innenriemens 7 auf, während gegen die Unterseite des oberen Federbandes 6 ein äußerer Riemen 8 anliegt.

Zwischen beiden Riemen ist ein als zylindrischer Stift ausgebildeter Finger 9 angeordnet, der eine vertikal verlaufende Trägerabstützung in horizontaler Richtung und quer zur Förderrichtung der Riemen 8, 7 durchdringt.

Die Trägerabstützung 10 erstreckt sich nach unten zwischen die beiden vertikalen Schenkel der beiden Winkel 2 hinein, welche in diesem Bereich mit einer reibungsmindernden Beschichtung 11 versehen sind. Hierbei stützt sich die Trägerabstützung 10 seitlich auf den Beschichtungen ab und bildet somit die erforderliche Seitenführung für einen Träger 12, an dessen Unterseite die Trägerabstützung 10 angebracht ist.

Es ist ersichtlich, daß dann, wenn sich die beiden Riemen 7 und 8 gemeinsam bewegen, der zwischen diesen eingeklemmte Finger bzw. Stift 9 durch Reibschluß von den Riemen 7, 8 mitgenommen wird.

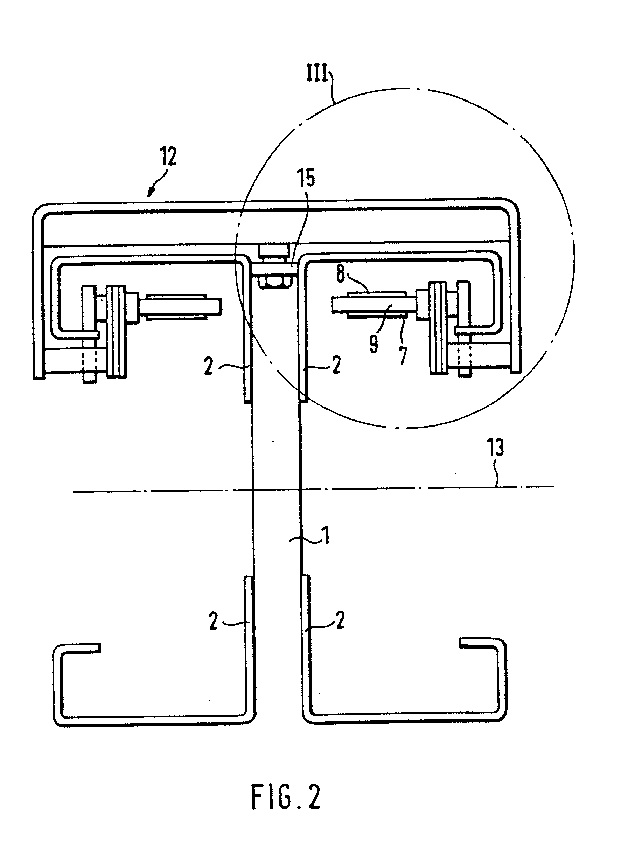

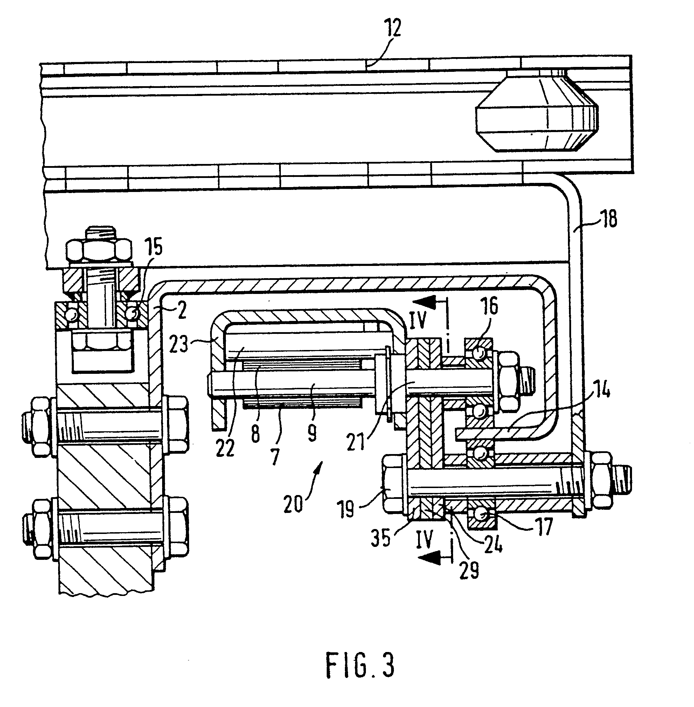

In Fig. 2 und 3 ist eine andere Ausführungsform einer Transportvorrichtung gezeigt, welche zum Transport höherer Lasten bzw. schwerer Träger und über größere Strecken hinweg eingerichtet ist.

In Fig. 2 ist der Schnitt durch die gesamte Vorrichtung gezeigt, wobei jedoch Einzelheiten nur im Oberteil des durch eine Mittellinie 13 geteilten Schnittes eingezeichnet sind. Fig. 3 zeigt aus diesem Oberteil dann die in Fig. 2 bezeichnete Einzelheit III noch näher.

Die in Fig. 1 und 2 gezeigten Vorrichtungen weisen eine Reihe von Übereinstimmungen auf, und zwar einen Mittelsteg 1, an dessen Ober- und Unterseite Winkel 2 angebracht sind.

Bei der Ausführungsform der Fig. 2 sind die Winkel nicht, wie bei jener der Fig. 1, nur als einfache Stahlwinkel ausgebildet, sondern zusätzlich zu einem solchen winkelförmigen Abschnitt weisen sie einen zweiten solchen auf, der jeweils an das Ende des jeweiligen horizontalen Schenkels von der Seite der Mittellinie 13 her und rechtwinklig angesetzt ist und seinerseits einen zweiten, freien, horizontalen, sich zum Mittelsteg 1 hin erstreckenden kurzen Schenkel aufweist.

Der letztgenannte kurze Schenkel trägt eine sich in Längsrichtung der Vorrichtung erstreckende Laufschiene. In der gezeigten Ausführungsform ist der Winkel 2 ein durchgehender Profilträger, so daß der letztgenannte, sich horizontal und von außen her zum Mittelsteg 1 hin erstreckende Schenkel selbst die durchgehende Laufschiene 14 bildet.

Ebenso wie bei der Vorrichtung der Fig. 1 stehen die Winkel 2 über den Mittelsteg 1 hinaus und bilden somit zwischeneinander jeweils eine in Längsrichtung der Vorrichtung verlaufende Nut, welche zur Führung des Trägers 12 dient. Im Gegensatz zur Ausführungsform der Fig. 1 ist dieser jedoch mittig mit einer Rolle 15 mit vertikaler Achse versehen, welche (sh. Fig. 3) von dem Außenkranz eines Wälzlagers, insbesondere eines Rillenkugellagers, gebildet ist.

Die Führungsrolle 15 dient nur der seitlichen Abstützung des Trägers 12; dieser stützt sich in vertikaler Richtung über Laufrollen 16, 17 auf der Laufschiene 14 ab. Hierbei trägt die Laufrolle 16, wenn der Träger an der Oberseite des Mittelstegs 1 ent langläuft, und es trägt die Laufrolle 17, wenn er an der Unterseite des Mittelstegs 1 entlangläuft.

Auch die Laufrollen 16 und 17 sind jeweils vom Außenkranz eines Wälzlagers gebildet.

Der eigentliche Träger 12 weist an seinen beiden seitlichen Rändern jeweils einen sich nach unten erstreckenden Steg 18 auf, der sich in Richtung zur Mittellinie 13 bis über die Laufschiene 14 hinaus erstreckt und in dessen Enden Tragschrauben 19 angebracht sind, die sich in Richtung auf den Mittelsteg 1 erstrecken, an ihrer Außenseite die Laufrollen 17 tragen und an ihrem einwärts gelegenen Ende eine Mitnehmereinrichtung 20 halten, die sich zum Träger hin erstreckt.

In der Mitnehmereinrichtung 20 ist auf der von der Laufrolle 17 abgewandten Seite der Laufschiene 14 ein sich horizontal und quer zur Längsrichtung der Vorrichtung erstreckender Zapfen 21 angebracht, der auf seinem außenseitigen Ende die Laufrolle 16 trägt und an seinem dem Mittelsteg 1 zugewandten Ende als Finger 9 ausgebildet ist, der von einem U-förmigen, nach unten offenen Bügel 23 umgriffen ist.

An der Ober- bzw. Unterseite dieses Fingers 9 verläuft jeweils ein äußerer Flachriemen 8 und ein innerer Flachriemen 7, welche gemeinsam ein Förderband bilden. Hierbei ist die gegenseitige Zuordnung von äußerem Flachriemen 8, innerem Flachriemen 7 und Finger 9 ähnlich jener mit den gleichen Bezugzeichen versehenen Elemente der Vorrichtung der Fig. 1.

Es ist aber noch zusätzlich, wie aus Fig. 3 ersichtlich, ein Spannfinger 22 in der Mitnehmereinrichtung 20 angeordnet, welcher sich parallel zum Finger 9 erstreckt und auf der von diesem abgewandten Seite des äußeren Flachriemens 8 angeordnet ist.

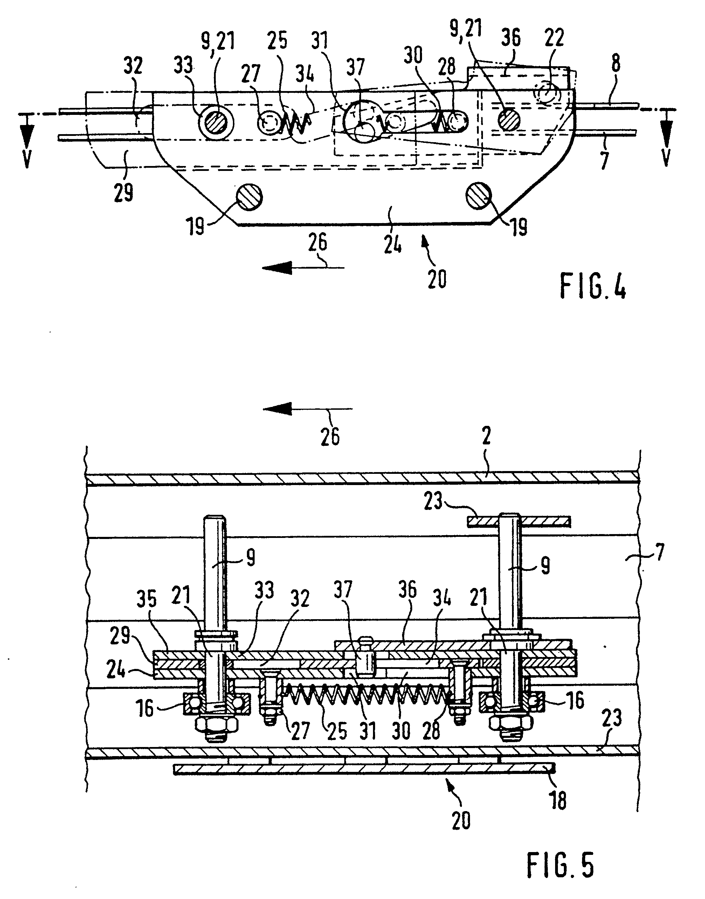

Durch einen im Zusammenhang mit Fig. 4 und 5 noch näher erläuterten Mechanismus kann der Spannfinger 22, der in Längsrichtung der Vorrichtung ein wenig gegenüber dem Finger 9 versetzt ist, näher zum äußeren Flachriemen 8 hin bzw. von diesem weg bewegt werden, so daß in der einen Endlage der Spannfinger praktisch ohne Eingriff mit dem äußeren Flachriemen 8 steht, in der anderen Endlage diesen aber zwingt, seine Laufrichtung beim Passieren des Spaltes zwischen Finger 9 und Spannfinger 22 zu ändern, um somit einen besseren Reibungseingriff herzustellen.

Die in Fig. 2 und 3 nur angedeutete Mitnehmereinrichtung 20 ist in Fig. 4 und 5 noch näher dargestellt, wobei die Fig. 4 den Schnitt längs Linie IV-IV in Fig. 3 darstellt, während Fig. 5 einen Horizontalschnitt längs Linie V-V in Fig. 4 zeigt.

Des besseren Verständnisses halber sind bereits anhand der Fig. 2 und 3 erläuterte Elemente in Fig. 4 und 5 nochmals mit den gleichen Bezugzeichen versehen.

Die Mitnehmereinrichtung 20 weist ein ebenes Grundblech 24 auf, welches vertikal und in Längsrichtung der Vorrichtung angeordnet ist. An diesem Grundblech sind mit gegenseitigem Abstand zwei Zapfen 21 fest angebracht. Diese Zapfen sind nach der einen Seite hin, wie bereits oben beschrieben, verlängert und bilden die Finger 9, während sie auf ihrer anderen Seite jeweils eine Laufrolle 16 tragen.

Die Förderrichtung ist in Fig. 4 und 5 durch jeweils einen Pfeil 26 bezeichnet.

Hinter dem in Förderrichtung 26 vorne liegenden Zapfen 21 ist am Grundblech 24 eine Verankerungsbüchse 27 angebracht, die sich zu jener Seite des Grundblechs 24 erstreckt, auf welcher auch die Laufrolle 16 angeordnet ist.

Von dieser Verankerungsbüchse 27 ausgehend erstreckt sich eine Spiral-Zugfeder 25 entgegen der Förderrichtung 26 nach hinten, ist an einer zweiten Verankerungsbüchse 28 festgelegt und trachtet, diese nach vorne zu ziehen.

Die hintere Verankerungsbüchse 28 ist an einem Schieber 29 befestigt und durchdringt das Grundblech 24 in einem Langloch 30, das sich von der in Fig. 5 gezeigten Lage der hinteren Verankerungsbüchse 28 ausgehend nach vorne erstreckt und etwa in der Mitte zwischen den beiden Zapfen 21 in eine runde Aussparung 31 übergeht, deren Durchmesser etwa doppelt so groß ist wie die Breite des Langloches 30.

Im vorderen Teil des Schiebers 29 ist ein vorderes Langloch 32 ausgebildet, das sich ebenso wie das hintere 30 in Förderrichtung erstreckt.

Über den Zapfen 21 ist eine kreisringförmige Büchse 33 aufgeschoben, die in das Langloch 32 eingreift.

Wenn die Spiralfeder 25 sich zusammenzieht, dann bewegt sie den Schieber 29 in der Förderrichtung aus der in Fig. 5 gezeigten Lage in die in Fig. 4 strichpunktiert gezeigte Lage, wobei der Schieber 29 nach vorne um etwa 30 mm über die Mitnehmereinrichtung 20 übersteht. Hierbei bewegt sich die hintere Verankerungsbüchse 28 im ortsfesten Langloch 30 und die ortsfeste Büchse 33 im beweglichen Langloch 32, so daß mit einfachen Mitteln die saubere gerade Führung des Schiebers 29 sichergestellt ist.

Im Schieber 29 ist ferner ein schrägliegendes Langloch ausgebildet, welche eine Kulisse 34 darstellt, die bei der Bewegung des Schiebers 29 zwischen seinen beiden Endstellungen derart an der runden Aussparung 31 vorbeiläuft, daß das Ende der Kulisse 34, in der Stellung der Fig. 4 (vordere Stellung) des Schiebers 29 hinter der oberen Hälfte der Aussparung 31 liegt, während in der hinteren Stellung des Schiebers 29 (Fig. 5) das vordere Ende der Kulisse 34 hinter der unteren Hälfte der Aussparung 31 liegt.

Auf der vom Grundblech 24 abgewandten Seite des Schiebers 29 ist ein Trageblech 35 angeordnet, welches ebenfalls wie das Grundblech 24 fest mit dem Zapfen 21 verbunden ist.

Die Bleche 24 und 35 bilden somit das tragende Gehäuse für die Mitnehmereinrichtung 20.

Auf der vom Grundblech 24 abgewandten Seite des Tragebleches 25 ist ein Schwenkarm 36 angebracht, der ebenfalls aus einem Blech gebildet ist, schwenkbar auf dem hinteren Zapfen 21 gelagert ist (Fig. 4 und 5 jeweils der rechte Zapfen 21) und sich nur ein wenig bis über die Hälfte der Mitnehmereinrichtung erstreckt.

Etwa in der Mitte zwischen den beiden Zapfen 21 ist am Ende des Schwenkarmes 36 ein Mitnehmerzapfen 37 angebracht, der sich quer durch die Einrichtung bis zur Außenoberfläche des Grundblechs 24 hin erstreckt und dessen Durchmesser etwa so groß ist wie die Breite der Kulisse 34.

Der Mitnehmerzapfen 37 ragt in die runde Aussparung 31 und durchdringt hierbei eine entsprechende, gegebenenfalls sogar etwas größere Aussparung im Trageblech 35.

Der Schwenkarm 36 erstreckt sich nach hinten und oben über den hinteren Zapfen 21 hinaus und trägt im Bereich seines oberen Endes den nur in Fig. 4 schematisch gezeigten Spannfinger 22.

Wie aus Fig. 4 ersichtlich, kann der Schwenkarm 36 mit seinem Mitnehmerzapfen 37 eine Schwenkbewegung durchführen, die durch den Rand der runden Aussparung 30 begrenzt ist.

Im Verlauf dieser Schwenkbewegung verlagert sich der Spannfinger 22 und nimmt die beiden in Fig. 4 gezeigten Endlagen ein, wobei in der oberen bzw. vorderen Endlage der äußere Flachriemen 8 praktisch berührungsfrei am Spannfinger vorbeiläuft, während dieser in der anderen Endlage gegen diesen Flachriemen 8 andrückt, so daß es nicht völlig geradlinig durch die Mitnehmereinrichtung 20 hindurch verläuft, sondern über dem hinteren Finger 9 nach hinten und unten abgeknickt und unter dem Spannfinger 22 nochmals derart geknickt wird, daß es wieder seine horizontale Lage einnimmt.

Die beschriebene Bewegung des Spannfingers 22 wird durch die Bewegung des Schiebers 29 bzw. die in ihm angeordnete Kulisse 34 erzwungen.

In der in Fig. 4 strichpunktiert gezeigten Ruhelage zieht die Feder 25 den Schieber 29 nach vorne, so daß er über Grundblech 24 und Trageblech 35 übersteht. Hierbei bewegt sich auch die Kulisse 34 nach vorne und bewegt zwangsweise durch die Kraft der Feder 25 den Mitnehmerzapfen 37 nach oben; hierdurch wird der Spannfinger 22 nach unten bewegt und stellt den Reibungseingriff mit dem Flachriemen 8 her.

Bei einem Stau oder bei einer sonst vorgesehenen Haltestelle läuft der ausgefahrene Teil des Schiebers 29 entweder auf die Mitnehmereinrichtung eines bereits stehenden Trägers oder auf ein Hindernis auf und kommt zum Stillstand, während sich der zugehörige Träger zusammen mit der Mitnehmereinrichtung 20 noch weiter nach vorne bewegt. Hierbei wird die Feder 25 gespannt und das Trageblech 35 und das Grundblech 24 bewegen sich gemeinsam mit dem Träger über die bereits stillstehende Kulisse 34 nach vorne, bis sie ihrerseits zum Stillstand kommen, indem das hintere Ende des Langloches 30 gegen die hintere, am Schieber 29 befestigte Verankerungsbüchse 28 aufläuft. Durch die Relativbewegung zwischen Kulisse 34 und dem Rest der Mitnehmereinrichtung 20 wird der Mitnehmerzapfen 37 aus seiner oberen Endlage in seine unter Endlage bewegt, wobei der Schwenkarm 36 verschwenkt und der Spannfinger 22 außer Eingriff mit dem äußeren Band 8 gehoben wird. Hierbei verbleibt zwischen den Fingern 9 und den Flachriemen 8 und 7 eine hinlängliche Reibung, um zu verhindern, daß die Kraft der Feder 25 den gesamten Träger nach hinten bewegt.

Wenn das den Schieber 29 hemmende Hindernis entfernt wird, dann bewegt er sich wieder in seine vordere Lage und kuppelt somit automatisch die Mitnehmereinrichtung 20 wieder in den Flachriemen 8 ein.

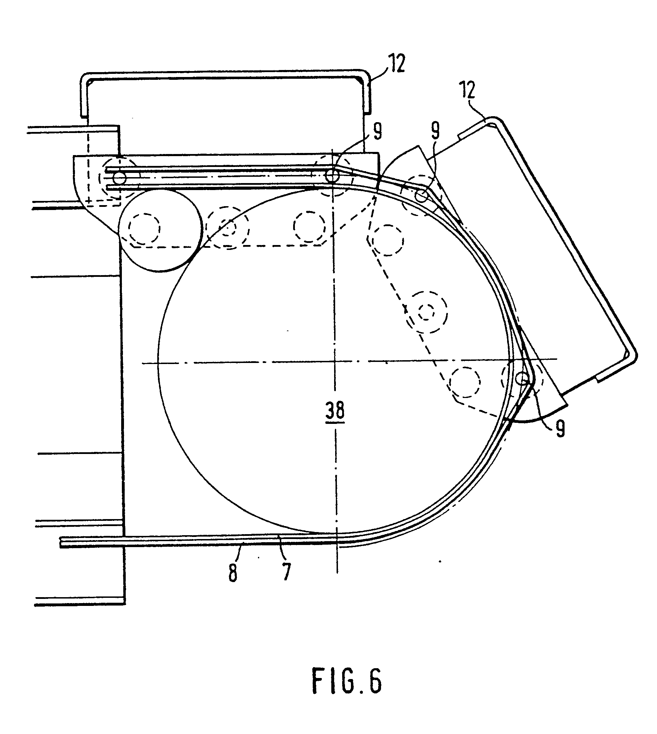

In Fig. 6 ist das Ende einer Fördereinrichtung gezeigt.

Der äußere und innere Flachriemn 8, 7 laufen über den Umfang eines Umlenkrades 38. Hierbei werden die Finger 9 eines jeden Trägers 12 fest zwischen die beiden Flachriemen 8, 7 eingeklemmt, wobei nicht nur eine erhebliche Andruckskraft, sondern, wie aus Fig. 6 ersichtlich, auch ein erheblicher Umschlingungswinkel dazu beitragen, daß eine außerordentlich hohe Reibungskraft entsteht, welche die Finger 9 daran hindert, in Förderrichtung der Flachriemen 8, 7 verschoben zu werden.

Somit können die Träger 12, wenn sie über ein Umlenkrad 38 laufen, zum Anheben oder Absenken erheblicher Lasten herangezogen werden.

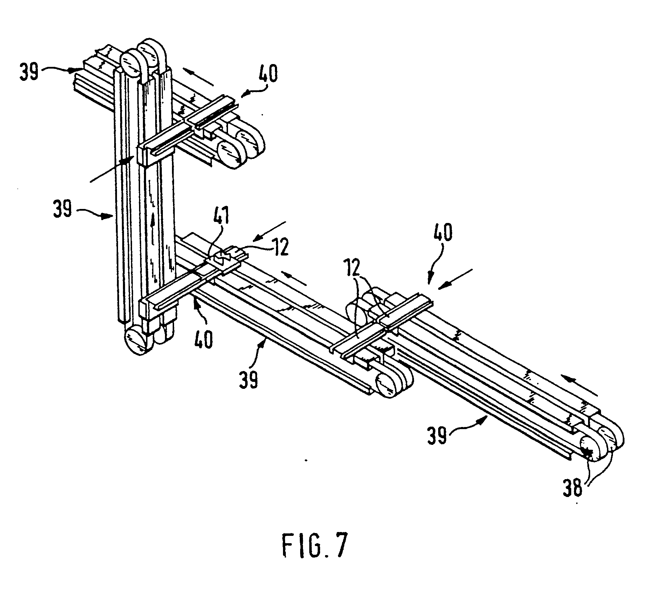

In Fig. 7 ist eine Förderanlage gezeigt, bei welcher mehrere Transportvorrichtungen 39 der oben beschriebenen Art miteinander gekoppelt sind.

Diese Transportvorrichtungen 39 enden jeweils im Bereich des Endes einer nachfolgenden Transportvorrichtung 39 und weisen gemeinsam mit dieser jeweils eine Umsetzstation 40 auf, an welcher jeweils ein Träger 12 der einen Transportvorrichtung 39 neben einem Träger 12 der anderen entweder zum Stillstand kommt oder mit gleicher Geschwindigkeit bewegt wird, und zwar so lange, bis eine Palette 41, die zur Aufnahme von Gegenständen eingerichtet ist, von dem einen Träger 12 auf den anderen umgesetzt ist.

Infolge des einfachen Aufbaus ist auch die Montage sehr einfach und praktisch keinerlei Wartung im Betrieb erforderlich. Überdies sind längere Förderstrecken möglich, als dies bisher der Fall war, und für die Umlenkung bzw. die Ausnutzung der Umlenkung zum Anheben oder Absenken von Gegenständen ist keinerlei zusätzlicher Konstruktionsaufwand erforderlich.

Bei geeigneter Beschichtung des Riemens kann dieser unmittelbar auf Stahlunterlagen laufen und bedarf somit nicht zusätzlicher Kunststoffunterlagen.

Im Ausführungsbeispiel der Fig. 1 kann auf einen Träger eine mit etwa 2 kg beladene Palette aufgesetzt werden, während bei der Ausführungsform der Fig. 2 die auf den Träger 12 aufgesetzte Palette bis zu 25 kg tragen kann.

Trotz der hohen Beladung ist jedoch der Energiebedarf außerordentlich klein, zumal infolge des selbsttätigen Auskuppeln der Träger an Staustellen die Flachriemen nicht abgebremst werden.

Die Verwendung dieser Flachriemen liefert außerdem eine sehr geringe Bauhöhe, da deren Dicke nur 2 bis 2,5 mm beträgt.

Besonders Vorteile der gezeigten Transportvorrichtung liegen darin, daß sie durch das Anbringen weiterer Förderbänder auch eine höhere Last tragen kann, und infolge des schmierungsfreien Betriebes auch kein Öl erfordert und somit in Lebensmittelbetrieben eingesetzt werden kann.

Außerdem erfolgt der Betrieb höchst geräuscharm.

## Patentansprüche

1. Transportvorrichtung zum Fördern von Werkstückträgern (12), mit mindestens einer Anordnung aus einem über Umlenkräder (38) laufenden und mindestens von einem dieser angetriebenen, sich parallel zur Förderrichtung erstreckenden Förderband (7, 8), das in Reibungseingriff mit den Trägern (12) steht, dadurch <u>gekennzeichnet</u>, daß das bzw. jedes Förderband aus zwei übereinanderliegenden Flachriemen (7, 8) gebildet ist, und daß jeder Träger (12) mindestens einen sich von der Seite her zwischen die Flachriemen (7, 8) erstreckenden Finger (9) aufweist.

2. Vorrichtung nach Anspruch 1, dadurch gekennzeichnet, daß der untenliegende Flachriemen (7) mindestens des Obertrums des Förderbandes über seine im wesentlichen ganze Länge hinweg auf einer Stützfläche (5) aufliegt.

3. Vorrichtung nach Anspruch 2, dadurch gekennzeichnet, daß die Stützfläche aus einem Stahlband (5) gebildet ist.

4. Vorrichtung nach einem der Ansprüche 1 bis 3, gekennzeichnet durch Laufschienen (14), auf welchen sich an den Trägern (12) angebrachte Tragrollen (16, 17) abstützen.

5. Vorrichtung nach einem der Ansprüche 1 bis 4, gekennzeichnet durch mindestens eine Laufschiene, an der sich mindestens ein am Träger (12) angebrachtes Führungsglied (10, 15), insbesondere eine Führungsrolle (15) mit vertikaler Achse, abstützt.

6. Vorrichtung nach einem der Ansprüche 1 bis 5, gekennzeichnet durch eine Einrichtung zum Verändern der Lage der Finger (9) bezüglich dem Förderband (7, 8).

7. Vorrichtung nach einem der Ansprüche 1 bis 6, dadurch gekennzeichnet, daß an jedem Träger (12) mindestens ein zusätzlicher Spannfinger (22) angeordnet ist, der nahe einem der Finger (9) und parallel zu diesem sowie bevorzugt auf der Außenseite des Förderbandes (7, 8), die von den Umlenkrädern (38) abgewandt ist, so nahe an diesem Finger (9) angeordnet ist, daß der diese Außenseite bildende Flachriemen (8) bei der Anlage am Finger (9) und am Spannfinger (22) umgelenkt wird.

8. Vorrichtung nach Anspruch 7, dadurch gekennzeichnet, daß der Spannfinger (22) quer zu seiner Längsachse und bevorzugt bis außer Eingriff mit den zugehörigen Flachriemen (8) beweglich angeordnet ist.

9. Vorrichtung nach Anspruch 8, dadurch gekennzeichnet, daß zur Bewegung des Spannfinger (22) außer Eingriff an der Vorderseite der Träger (12), in Förderrichtung gesehen, ein mit Spannfinger (22) verbundenes Auslöseglied (29) angeordnet ist.

10. Vorrichtung nach Anspruch 9, dadurch gekennzeichnet, daß der Spannfinger (22) in seinen Endlagen in und außer Eingriff mit Flachriemen (8) arretierbar ist.

11. Vorrichtung nach Anspruch 10, dadurch gekennzeichnet, daß die Flachriemen (7, 8) aus Zugschicht und zwei Reibschichten bestehen.

12. Förderanlage mit mindestens einer Transportvorrichtung nach einem der Ansprüche 1 bis 11, gekennzeichnet durch mindestens zwei mit ihren Längsenden benachbarte Transportvorrichtungen (39), bei denen die Förderbänder (7, 8) in ihrer Geschwindigkeit und Trägerfolge so aufeinander abgestimmt sind, daß auf einem Träger (12) der einen Transportvorrichtung mitgeführter Gegenstand auf einem der anderen Transportvorrichtung dann übergeben wird, wenn beide Träger (12) das jeweils zugehörige Umlenkrad (38) umrunden.

13. Förderanlage mit einer Transportvorrichtung nach einem der Ansprüche 1 bis 11, dadurch gekennzeichnet, daß das Förderband (7, 8) mindestens einer Transportvorrichtung (39) gegenüber der Horizontalen geneigt, bevorzugt vertikal angeordnet ist.

## Claims

1. Transporting device for conveying work piece supports (12) with at least one arrangement of a conveyor belt (7, 8) extending parallel to the conveying direction and running around reversing wheels (38) and driven by at least one of these, which is in frictional engagement with the supports (12) characterised in that the or each conveyor belt is constructed of two flat belts (7, 8) one lying above the other and that each support (12) has at least one finger (9) laterally extending between the flat belts (7, 8).

2. Device according to claim 1 characterised in that the lower lying flat belt (7), at least in the upper run of the conveyor belt, lies essentially over its whole length on a support surface (5).

3. Device according to claim 2 characterised in that the support surface is constituted by a steel strip (5).

4. Device according to one of claims 1 to 3 characterised by running rails (14) on which carrier rollers (16, 17) fixed to the support (12) are supported.

5. Device according to one of claims 1 to 4 characterised by at least one running rail on which at least one guide member (10, 15) fixed to the support (12) is supported, particularly a guide roller (15) with a vertical axis.

6. Device according to one of claims 1 to 5 characterised by an arrangement for changing the position of the finger (9) relative to the conveyor belt (7, 8).

7. Device according to one of claims 1 to 6 characterised in that on each support (12) there is arranged at least one additional tensioning finger (22) which, near one of the fingers (9) and parallel to this, as well as preferably on the outer side of the conveyor belt (7, 8) which is turned away from the reversing wheels (38), is so arranged near to this finger (9) that the flat belt constituting this outer side thereof in the arrangement is angled in the region where it lies against the finger (9) and the tensioning finger (22).

8. Device according to claim 7 characterised in that the tensioning finger (22) is arranged movable transversely to its longitudinal axis and preferably up to being out of engagement with its respective flat belt (8).

9. Device according to claim 8 characterised in that, for movement of the tensioning finger (22) out of engagement with the front side of the support (12), seen in the conveying direction, there is arranged a release member (29) connected with the tensioning finger (22).

10. Device according to claim 9 characterised in that the tensioning finger (22) can be locked in its end position in and out of engagement with flat belts (8).

11. Device according to claim 10 characterised in that the flat belts (7, 8) consist of tension layer and two friction layers.

12. Conveying plant with at least one transporting device according to one of claims 1 to 11 characterised by at least two transporting devices (39) with their longitudinal ends neighbouring one another in which the conveyor belts (7, 8) are so regulated in their speed and the sequence of the supports is arranged in such a way relative to one another that on one support (12) the article carried along by the one transporting device is then transferred to one of the other transporting device if both supports (12) each go round the respective reversing wheel (38).

13. Conveying plant with a transporting device according to one of claims 1 to 11, characterised in that the conveyor belt (7, 8) of at least one transport device (39) is inclined with respect to the horizontal, preferably arranged vertically.

**Revendications**

1. Dispositif de transport destiné à convoyer des supports de pièces (12) comportant au moins un agencement formé d'une bande transporteuse (7, 8) passant sur des poulies de renvoi (38), entraînée par au moins une de ces dernières. s'étendant parallèlement à le direction de convoyage et engagée par friction avec les supports (12), caractérisé en ce que la ou chaque bande transporteuse est formée de deux courroies plates (7, 8) superposées et en ce que chaque support (12) présente au moins un doigt (9) se prolongeant a partir du côté entre les courroies plates (7, 8).

2. Dispositif selon la revendication 1, caractérisé en ce que la courroie plate inférieure (7) du brin supérieur au moins de la bande transporteuse repose pour l'essentiel sur toute sa longueur sur une surface d'appui (5).

3. Dispositif selon la revendication 2, caractérisé en ce que la surface d'appui est formée d'un feuillard d'acier (5).

4. Dispositif selon l'une des revendications 1 à 3, caractérisé par des rails de roulement (14) sur lesquels s'appuient des galets porteurs (16, 17) placés sur les supports (12).

5. Dispositif selon l'une des revendications 1 à 4, caractérisé par au moins un rail conducteur sur lequel s'appuie au moins un élément de guidage (10, 15) placé sur le support (12), en particulier une poulie de guidage (15) ayant un axe vertical.

6. Dispositif selon l'une des revendications 1 à 5, caractérisé per un mécanisme destiné à modifier le position des doigts (9) per rapport à le bande transporteuse (7, 8).

7. Dispositif selon l'une des revendications 1 à 6, caractérisé en ce qu'il est placé sur chaque support (12) au moins un doigt de tension (22) supplémentaire qui est placé près de l'un des doigts (9) et parallèlement à ce dernier ainsi que de préférence sur le face extérieure de la bande transporteuse (7, 8) qui est opposée aux poulies de renvoi (38), si près de ce doigt (9) que la courroie plate (8) formant cette face extérieure est déviée lorsqu'elle repose contre le doigt (9) et le doigt de tension (22).

8. Dispositif selon la revendication 7, caractérisé en ce que le doigt de tension (22) est placé mobile transversalement à son axe longitudinale et de préférence jusqu'au point de dégagement de la courroie plate correspondante (8).

9. Dispositif selon la revendication 8, caractérisé en ce que, afin de mettre le doigt de tension (22) hors de prise, il est placé sur la face avant des supports (12) dans le sens de convoyage, un élément de déclenchement (29) relié au doigt de tension (22).

10. Dispositif selon la revendication 9, caractérisé en ce que le doigt de tension (22) peut être arrêté dans ses positions extrèmes, en prise ou hors de prise avec les courroies plates (8).

11. Dispositif selon la revendication 10, caractérisé en ce que les courroies plates (7, 8) sont composées d'une couche de tension et de deux couches de frottement.

12. Installation de convoyage comportant au moins un dispositif de transport selon l'une au moins des revendications 1 à 11, caractérisée par au moins deux dispositifs de transport (39) voisins avec leurs extrémités longitudinales et dans lesquels les bandes transporteuses (7, 8) sont synchronisées de telle sorte au niveau de la vitesse et de la succession de supports, qu'un objet acheminé sur un support (12) de l'un des dispositifs de transport est cédé à un support de l'autre dispositif de transport, lorsque les deux supports (12) passent autour de la poulie de renvoi (38) correspondante.

13. Installation de convoyage comportant un dispositif de transport selon l'une des revendications 1 à 11, caractérisée en ce que la bande transporteuse (7, 8) d'au moins un dispositif de transport (39) est placée inclinée par rapport à l'horizontal, et de préférence verticalement.

FIG. 1

FIG.2

FIG.3

FIG.4

FIG.5

FIG.6

FIG. 7